(19) Europäisches Patentamt
European Patent Office
Office européen des brevets

(11) **EP 4 016 476 B1**

(12) **EUROPEAN PATENT SPECIFICATION**

(45) Date of publication and mention
of the grant of the patent:
**25.02.2026 Bulletin 2026/09**

(21) Application number: **21215910.7**

(22) Date of filing: **20.12.2021**

(51) International Patent Classification (IPC):
*G06V 20/58* (2022.01)     *G06V 10/44* (2022.01)
*G06V 10/98* (2022.01)     *G06V 10/75* (2022.01)

(52) Cooperative Patent Classification (CPC):
**G06V 20/586; G06V 10/457; G06V 10/752;
G06V 10/98**

(54) **PARKING LOT CORNER POINT CORRECTION METHOD AND PARKING LOT CORNER POINT CORRECTION SYSTEM, AND VEHICLE**

PARKPLATZECKPUNKTKORREKTURVERFAHREN UND
PARKPLATZECKPUNKTKORREKTURSYSTEM UND FAHRZEUG

PROCÉDÉ DE CORRECTION DES POINTS D'ANGLE D'UN PARC DE STATIONNEMENT ET
SYSTÈME DE CORRECTION DES POINTS D'ANGLE D'UN PARC DE STATIONNEMENT ET
VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.12.2020 CN 202011509067**

(43) Date of publication of application:
**22.06.2022 Bulletin 2022/25**

(73) Proprietor: **Nio Technology (Anhui) Co., Ltd
Hefei City, Anhui 230601 (CN)**

(72) Inventors:
• **Dai, Junyi
Hefei City, Anhui 230601 (CN)**
• **Wang, Shiting
Hefei City, Anhui 230601 (CN)**

(74) Representative: **Vossius & Partner
Patentanwälte Rechtsanwälte mbB
Siebertstraße 3
81675 München (DE)**

(56) References cited:
**US-A1- 2020 090 516     US-A1- 2020 134 331
US-A1- 2020 294 310**

• **ANONYMOUS: "Best Fit Rectangles", 21 January
2020 (2020-01-21), XP055917666, Retrieved from
the Internet <URL:https://web.archive.org/web/
20200121004111/https://datagenetics.com/blog/
march12014/index.html> [retrieved on 20220503]**
• **ANONYMOUS: "Thermodynamic diagrams -
Wikipedia", 21 November 2018 (2018-11-21),
XP055918015, Retrieved from the Internet
<URL:https://en.wikipedia.org/w/index.php?
title=Thermodynamic_diagrams&
oldid=869905606> [retrieved on 20220504]**

**Description**

Technical Field

The invention relates to vehicle control technology, and in particular to a parking lot corner point correction method, a parking lot corner point correction system, and a vehicle including the parking lot corner point correction system.

Background Art

Currently, the most widely applied parking lot detection algorithms all involve the detection of four corner points of a parking lot, so that a parking lot is formed based on the four corner points. In a single-frame image, as long as the deviation of a corner point from a true value is within a certain range, it can be considered that the detection result is correct, and there is no jitter. However, in a video stream, once there is a certain deviation between detection results of two adjacent frames, a jitter may occur to the whole parking lot, and the parking lot may become an irregular quadrangle, resulting in unpredictable deviations in automatic parking.

US 2020/294310 A1 relates to a neural network that may be used to determine corner points of a skewed polygon (e.g., as displacement values to anchor box corner points) that accurately delineate a region in an image that defines a parking space. Further, the neural network may output confidence values predicting likelihoods that corner points of an anchor box correspond to an entrance to the parking spot. The confidence values may be used to select a subset of the corner points of the anchor box and/or skewed polygon in order to define the entrance to the parking spot.

US 2020/090516 A1 relates to a parking availability map system and method, including: a sensor-based parking space detection system coupled to a vehicle and operable for detecting and identifying open and occupied parking spaces within a predetermined vicinity of the vehicle; and an application server disposed remotely from the vehicle and executing an algorithm operable for receiving open and occupied parking space data from the sensor-based parking space detection system, receiving a parking space availability query from a user disposed remotely from the server, and, responsive to the parking space availability query, transmitting parking space availability information to the user.

Summary of the Invention

The invention is defined in the appended claims. Aspects, embodiments and examples disclosed herein which do not fall within the scope of the appended claims do not form part of the invention and are merely provided for illustrative purposes.

In view of the above problem, the invention aims to provide a parking lot corner point correction method, a parking lot corner point correction system, and a vehicle including the parking lot corner point correction system, so as to improve the parking accuracy.

An aspect of the invention provides a parking lot corner point correction method, the method including:

an obtaining step of obtaining a parking lot corner point of a parking lot; and
a correction step of performing, based on a position relationship between parking lot corner points of the parking lot, rectangular correction on the parking lot corner points to obtain a corrected parking lot.

Optionally, the obtaining step includes:

a first obtaining sub-step of obtaining a parking lot corner point of a parking lot;
a determination sub-step of determining whether a corner point confidence level of the parking lot corner point meets a first threshold and whether a corner point offset of the parking lot corner point meets a second threshold, and jumping to the correction step if it is determined that the corner point confidence level of the parking lot corner point meets the first threshold and the corner point offset of the parking lot corner point meets the second threshold, otherwise, proceeding to a second obtaining sub-step; and
the second obtaining sub-step of discarding the parking lot corner point of the parking lot that is detected in the first obtaining sub-step, and then using a parking lot corner point at a corresponding position that is predicted by an odometer, as the parking lot corner point of the parking lot.

Optionally, the correction step includes:

forming four sides by the parking lot corner points of the parking lot, and obtaining four rectangles separately by taking one side in the four sides as a reference and taking the depth as a mean of the side length of the side; and
taking, from among the four rectangles and as the corrected parking lot, a rectangle with the maximum confidence level on a thermodynamic diagram.

Optionally, the confidence level of the rectangle on the thermodynamic diagram is obtained by means of the levels of confidence of the four corner points of the rectangle on the thermodynamic diagram.

Optionally, the confidence levels on the thermodynamic diagram are obtained by means of a corner point prediction model.

Optionally, the correction step includes:

selecting two sides from four sides formed by the parking lot corner points of the parking lot, and calculating a center line of the two sides;

obtaining a parking lot entrance line segment of the parking lot according to a position relationship between a vehicle and the parking lot corner point of the parking lot;

obtaining a point at which the center line intersects with the parking lot entrance line segment; and

based on the position of the intersection point and the positions of the two sides, performing rectangular correction on the parking lot corner point by using a geometric relationship to obtain the corrected parking lot.

Optionally, if the two sides are parallel, a line which is parallel to the two sides and has an equal distance to the two sides is taken as a center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

Optionally, if the two sides are not parallel, an angular bisector of an angle formed by extension lines of the two sides is used as the center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

An aspect of the invention provides a parking lot corner point correction system, the system including:

an obtaining module for obtaining a parking lot corner point of a parking lot;

and

a correction module for performing, based on a position relationship between parking lot corner points of the parking lot, rectangular correction on the parking lot corner points to obtain a corrected parking lot.

Optionally, the obtaining module includes:

a first obtaining sub-module configured to obtain a parking lot corner point of a parking lot;

a determination sub-module configured to determine whether a corner point confidence level of the parking lot corner point acquired by the first obtaining sub-module meets a first threshold and whether a corner point offset of the parking lot corner point meets a second threshold, and then output a determination result; and

a second obtaining sub-module configured to obtain a parking lot corner point at a corresponding position that is predicted by an odometer; and

an output module configured to provide, based on the determination result from the determination sub-module and to the correction module, the parking lot corner point output by the first obtaining sub-module or the parking lot corner point output by the second obtaining sub-module.

Optionally, in the correction module, four sides are formed by the parking lot corner points of the parking lot, four rectangles are obtained separately by taking one side in the four sides as a reference and taking the depth as a mean of the side length of the side, and a rectangle with the maximum confidence level on a thermodynamic diagram is taken from among the four rectangles and is used as the corrected parking lot.

Optionally, the confidence level of the rectangle on the thermodynamic diagram is obtained by means of the levels of confidence of the four corner points of the rectangle on the thermodynamic diagram.

Optionally, the confidence levels on the thermodynamic diagram are obtained by means of a corner point prediction model.

Optionally, in the correction module, two sides are selected from four sides formed by the parking lot corner points of the parking lot, a center line of the two sides is calculated, a parking lot entrance line segment of the parking lot is obtained according to a position relationship between a vehicle and the parking lot corner points of the parking lot, a point at which the center line intersects with the parking lot entrance line segment is obtained, and based on the position of the intersection point and the positions of the two sides, rectangular correction is performed on the parking lot corner point to obtain the corrected parking lot.

Optionally, if the two sides are parallel, a line which is parallel to the two sides and has an equal distance to the two sides is taken as a center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

Optionally, if the two sides are not parallel, an angular bisector of an angle formed by extension lines of the two sides is used as the center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

An aspect of the invention provides a computer-readable medium having a computer program stored thereon, where the computer program implements, when executed by a processor, a parking lot corner point correction system as described in claims.

An aspect of the invention provides a computer device, which includes a storage module, a processor, and a computer program stored on the storage module and executable on the processor, where the computer program implements, when executed by the processor, a parking lot corner point correction system as described.

An aspect of the invention provides a vehicle, which includes a parking lot corner point correction system as described in an aspect of the invention.

Brief Description of the Drawings

FIG. 1 is a schematic flowchart showing a parking lot corner point correction method in an implementation mode of the invention.

FIG. 2 is a schematic flowchart showing a parking lot corner point correction method in Embodiment 1 of the invention.

FIG. 3 is a schematic diagram showing rectangular correction in the parking lot corner point correction method in Embodiment 1 of the invention.

FIG. 4 is a schematic diagram showing a correction result obtained using the parking lot corner point correction method in Embodiment 1 of the invention.

FIG. 5 is a schematic flowchart showing a parking lot corner point correction method in Embodiment 2 of the invention.

FIG. 6 is a schematic diagram showing rectangular correction in two cases of parallel and non-parallel long sides in the parking lot corner point correction method in Embodiment 2 of the invention.

FIG. 7 is a schematic diagram showing one example of a correction result obtained using the parking lot corner point correction method in Embodiment 2 of the invention.

FIG. 8 is a schematic diagram showing another example of a correction result obtained using the parking lot corner point correction method in Embodiment 2 of the invention.

FIG. 9 is a structural block diagram showing a parking lot corner point correction system of the invention.

Detailed Description of Embodiments

Some of multiple embodiments of the invention are introduced below and are intended to provide a basic understanding of the invention. They are not intended to confirm key or decisive elements of the invention or limit the scope of protection.

For the sake of brevity and illustrative purposes, this document mainly describes the principles of the invention with reference to its exemplary embodiments. However, those skilled in the art will readily recognize that the same principles can be equivalently applied to all types of parking lot corner point correction methods, parking lot corner point correction systems, and vehicles including the parking lot corner point correction system, and the same principles can be implemented therein. Any such changes do not depart from the scope of this patent application.

The inventors of the invention have found that in the case of vertical, horizontal and small-angle inclined parking lots, there are currently also the following problems to be solved:

a phenomenon of jitter occurs in a parking lot detection result in a video;

a model detection result is a non-standard rectangle, which increases the difficulty in parking path planning; and

when a small-angle inclined parking lot is determined to be a vertical/horizontal parking lot, inclined parking is caused.

In order to solve the problems above, the invention provides a parking lot corner point correction method. The parking lot corner point correction method provided in the invention includes the following steps:

an obtaining step of obtaining a parking lot corner point of a parking lot; and

a correction step of performing, based on a position relationship between parking lot corner points of the parking lot, rectangular correction on the parking lot corner points to obtain a corrected parking lot.

Here, the parking lot corner points are obtained by detecting parking lot corner point coordinates in an image acquired by a camera, for example, obtained by means of a corner point detection model (based on a deep learning network). Here, preferably, the state of the parking lot corner points can be determined reasonably.

A parking lot corner point correction method in an implementation of the invention will be described below.

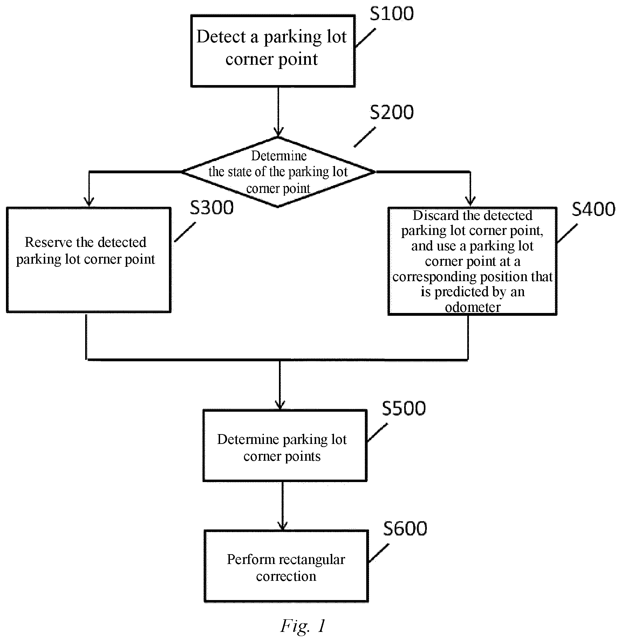

FIG. 1 is a schematic flowchart showing a parking lot corner point correction method in an implementation mode of the invention.

As shown in FIG. 1, the parking lot corner point correction method in an implementation of the invention includes:

step S 100: detecting a parking lot corner point of a parking lot;
step S200: determining the state of the parking lot corner point, which specifically involves, for example, determining whether a corner point confidence level of the parking lot corner point meets a preset first threshold and whether a corner point offset thereof meets a preset second threshold, proceeding to step S300 if it is determined that the corner point confidence level meets the first threshold and the corner point offset meets the second threshold, otherwise, proceeding to step S400;
step S300: reserving the parking lot corner point detected in step S 100;
step S400: discarding the parking lot corner point detected in step S100, and then using a parking lot corner point at a corresponding position that is predicted by an odometer, as the parking lot corner point of the parking lot;
step S500: determining four parking lot corner points based on step S300 or step S400; and
step S600: performing, based on a position relationship between parking lot corner points of the parking lot, rectangular correction on the parking lot corner points to obtain a corrected parking lot.

Here, determination of the state of the parking lot corner point mainly refers to determining whether the corner point detected by a model is reasonable. For example, a corner point tracked by the odometer should be at position (x, y), but there is a large offset in a model detection result (a threshold is preset). In this case, it is considered that the corner point detected by the model is less accurate, and the detection result of the corner point is discarded. A determination criterion may be set as follows: corner point confidence level > first threshold and corner point offset < second threshold. Here, the confidence level is output by the detection model, the detection model may represent possible coordinates (x, y) at which a point is a parking lot corner point and the possibility (confidence level) that the coordinates belong to the corner point, and the corner point offset refers to the distance between the detected corner point and a corner point predicted according to a result at a previous time.

Determining the state of the parking lot corner points is for the purpose of ensuring that the four corner points are as accurate as possible. For a parking lot corner point at a time t, there are three groups of data available, which are respectively as follows: (1) a parking lot corner point predicted by using the odometer from the beginning (which parking lot corner point has the lowest accuracy, but is not too far away from a target parking lot); (2) a parking lot corner point detected by the corner point detection model (which parking lot corner point may achieve the highest accuracy, but there may be a case where an individual corner point is deviated); and (3) a parking lot corner point predicted using the odometer according to a detection result at a time t-1 (that is, the previous time) (which parking lot corner point has a higher accuracy and is relatively stable). "Using a corner point at a corresponding position that is tracked by the odometer" above refers to the parking lot corner point predicted at the previous time in the case (3).

Next, two embodiments of the parking lot corner point correction method of the invention will be described.

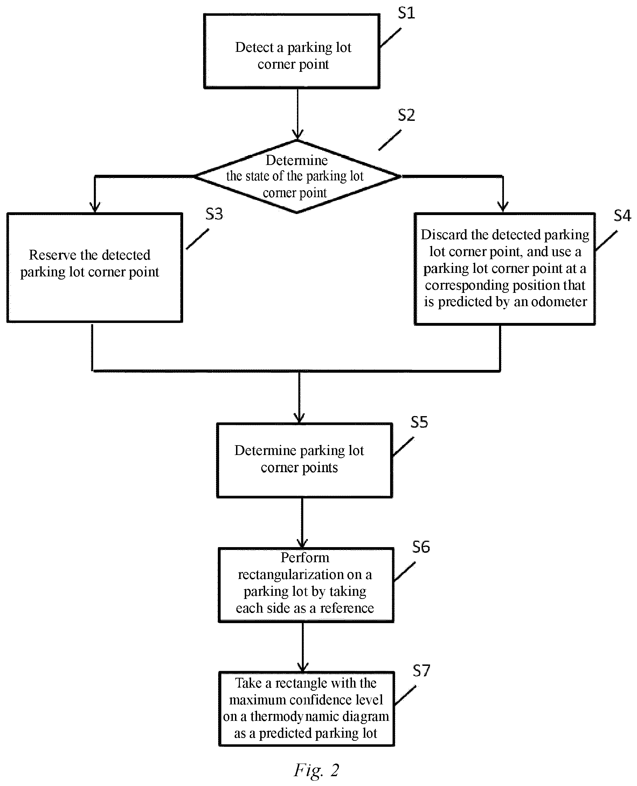

FIG. 2 is a schematic flowchart showing a parking lot corner point correction method in Embodiment 1 of the invention.

The parking lot corner point correction method provided in Embodiment 1 of the invention includes the following steps:

step S1: detecting a parking lot corner point of a parking lot;
step S2: determining the state of the parking lot corner point, which specifically involves, for example, determining whether a corner point confidence level of the parking lot corner point meets a preset first threshold and whether a corner point offset thereof meets a preset second threshold, proceeding to step S3 if it is determined that the corner point confidence level meets the preset first threshold and the corner point offset meets the preset second threshold, otherwise, proceeding to step S4;
step S3: reserving the parking lot corner point detected in step S1;
step S4: discarding the parking lot corner point detected in step S1, and then using a parking lot corner point at a corresponding position that is predicted by an odometer, as the parking lot corner point of the parking lot;
step S5: determining four parking lot corner points; and
step S6: forming four sides by the parking lot corner points of the parking lot, and obtaining four rectangles separately by taking one side in the four sides as a reference and taking the depth as a mean of the side length of the side; and step S7: taking, from among the four rectangles and as the corrected parking lot, a rectangle with the maximum confidence level on a thermodynamic diagram. (i.e., a predicted parking lot), where the confidence level of the rectangle on the thermodynamic diagram can be obtained by means of the levels of confidence of the four corner points of the rectangle on the thermodynamic diagram (the confidence levels on the thermodynamic diagram are obtained by means of a corner point prediction model.).

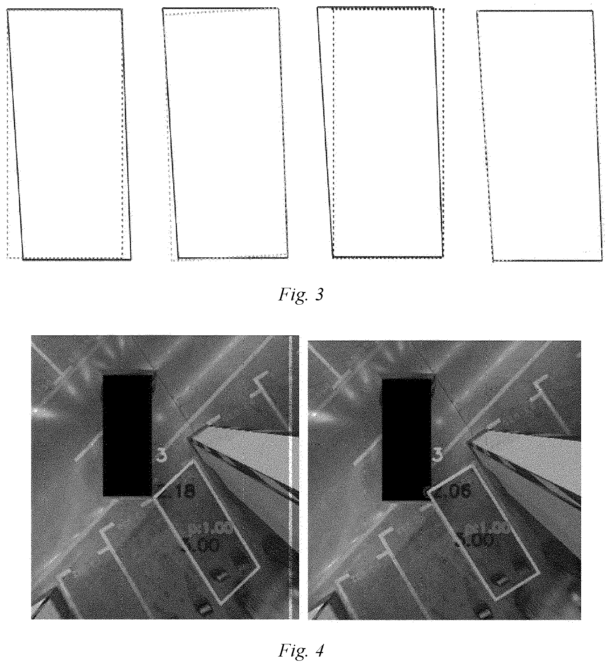

FIG. 3 is a schematic diagram showing rectangular correction in the parking lot corner point correction method in Embodiment 1 of the invention.

In the thermodynamic diagram of FIG. 3, an upper side, a right side, a lower side and a left side are taken as references in sequence from left to right. One side of the parking lot is selected, and by taking the side as a reference and taking the depth as a mean of the side length of the side, four rectangles are formed. For each rectangle, a confidence level of the rectangle may be obtained according to confidence levels of four corner points of the rectangle on the thermodynamic diagram, and by comparing the confidence levels of the four rectangles, the rectangle with the maximum confidence level is taken as a detection result to implement rectangularization.

FIG. 4 is a schematic diagram showing a correction result obtained using the parking lot corner point correction method in Embodiment 1 of the invention.

The parking lot corner point correction method in Embodiment 1 of the invention mainly solves the problem that, when there is an interference point, points obtained from the thermodynamic diagram lack shape information of the parking lot and there may be deviations in the detection of the parking lot corner point. In FIG. 4, there is a derivation in a parking lot corner point at the upper left corner in the left-side view, and the parking lot corner point may be corrected into a parking lot corner point at the upper left corner in the right-side view by using the correction method in Embodiment 1.

Therefore, as described above, according to the parking lot corner point correction method in Embodiment 1 of the invention, the influence of a deviation from the detection result can be reduced, and the parking accuracy can be improved.

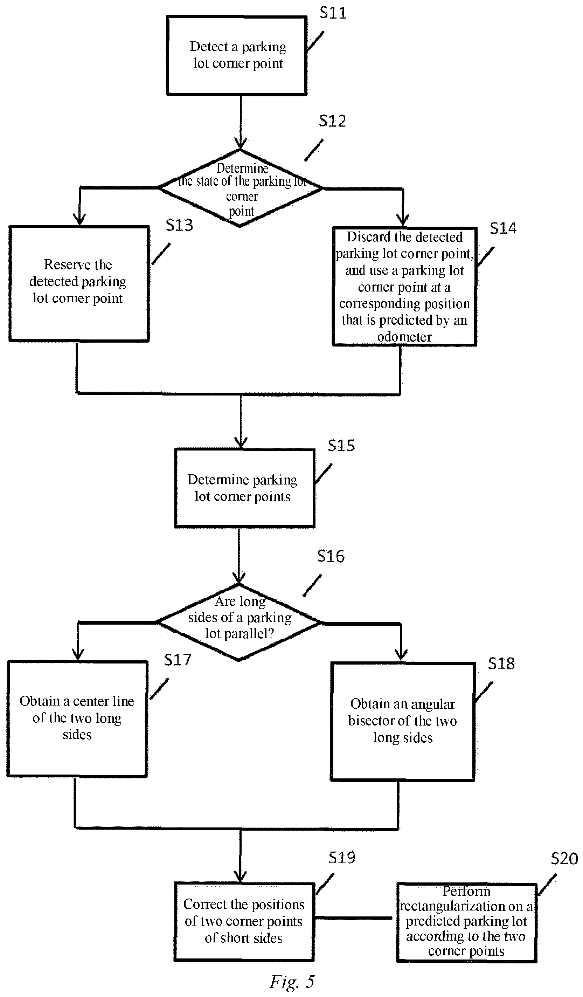

FIG. 5 is a schematic flowchart showing a parking lot corner point correction method in Embodiment 2 of the invention.

The parking lot corner point correction method provided in Embodiment 2 of the invention includes the following steps:

step S11: detecting a parking lot corner point of a parking lot;

step S12: determining the state of the parking lot corner point, which specifically involves, for example, determining whether a corner point confidence level of the parking lot corner point meets a preset first threshold and whether a corner point offset thereof meets a preset second threshold, proceeding to step S13 if it is determined that the corner point confidence level meets the first threshold and the corner point offset meets the second threshold, otherwise, proceeding to step S14;

step S13: reserving the parking lot corner point detected in step S11;

step S 14: discarding the parking lot corner point detected in step S11, and then using a parking lot corner point at a corresponding position that is predicted by an odometer, as the parking lot corner point of the parking lot;

step S15: determining four parking lot corner points according to step S13 or step S14; and

step S16: determining whether long sides of the parking lot are parallel, if yes, proceeding to step S17, and if not, proceeding to step S18;

step S17: obtaining a center line of the two parallel long sides;

step S18: obtaining an angular bisector of an angle formed by the two long sides;

step S19: correcting the positions of two corner points of short sides; and

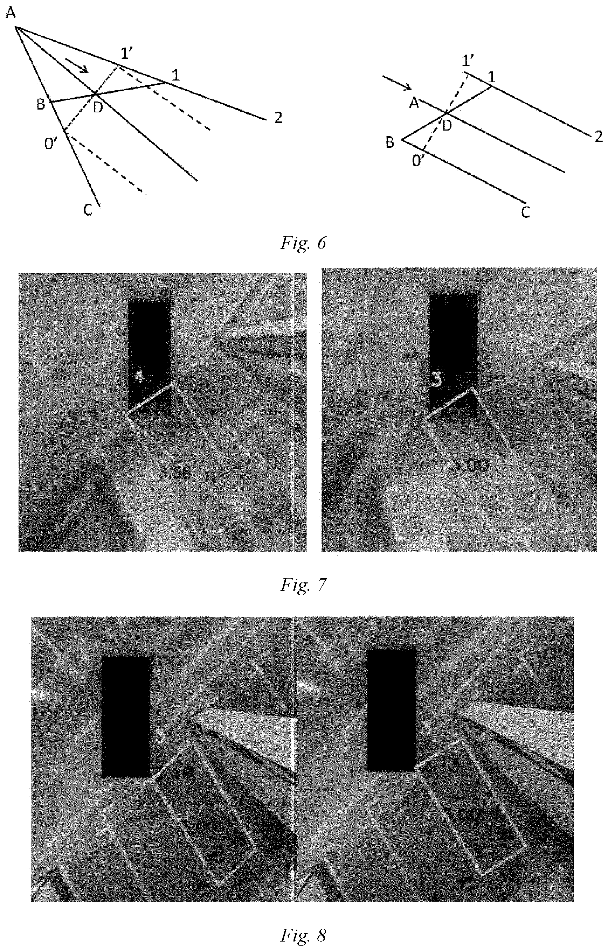

step S20: performing rectangularization on the parking lot according to the two corner points. FIG. 6 is a schematic diagram showing rectangular correction in two cases of parallel and non-parallel long sides in the parking lot corner point correction method in Embodiment 2 of the invention.

If the long sides are not parallel, as shown in the left-side view of FIG. 6, four corner points are sequentially C, B, 1, and 2 in the clockwise direction, and the arrow represents a traveling direction of a vehicle. B1 is a parking lot entrance line segment calculated according to a relative position of the vehicle with respect to the parking lot. A parking lot line BC and a parking lot line 12 at two sides of the parking lot entrance line segment B1 are selected, an intersection point A of extension lines of the two lines is calculated, and an angle bisector AD of an angle BA1 is obtained, where point D is a point at which the angle bisector intersects with the parking lot entrance line segment B1, and a perpendicular line 0'1' is drawn for AD through point D, where 0' is a point at which the perpendicular line 0'1' intersects with AC, and 1' is a point at which the perpendicular line 0'1' intersects with A2.

Here, assuming that the coordinates of point A are A $(x_A, y_A)$, the coordinates of point B are B $(x_B, y_B)$, the coordinates of point C are C $(x_C, y_C)$, the coordinates of point D are D $(x_D, y_D)$, the coordinates of point 0' are 0' $(x_{0'}, y_{0'})$, and the coordinates of point 1' are 1' $(x_{1'}, y_{1'})$, the coordinates of point 0' and point 1' may be calculated based on the coordinates of point A, point B, point C, and point D.

The following formulas represent the calculation process for solving $x_{0'}$ and $y_{0'}$ in the coordinates 0 $(x_{0'}, y_{0'})$ of point 0', and the calculation process for solving $x_{1'}$ and $y_{1'}$ in the coordinates 1' $(x_{1'}, y_{1'})$ of point 1' is similar to the process for solving the coordinates 0' $(x_{0'}, y_{0'})$ of point 0'.

$$\overrightarrow{AD} \cdot \overrightarrow{D0'} = 0$$

$$\overrightarrow{B0'} \cdot \overrightarrow{BC} = 0$$

$$\overrightarrow{AD} = (x_D - x_A, y_D - y_A)$$

$$\overrightarrow{D0'} = (x_{0'} - x_D, y_{0'} - y_D)$$

$$\overrightarrow{B0'} = (x_{0'} - x_B, y_{0'} - y_B)$$

$$\overrightarrow{BC} = (x_C - x_B, y_C - y_B)$$

$$\begin{cases} (x_D - x_A) \cdot (x_{0'} - x_D) + (y_D - y_A) \cdot (y_{0'} - y_D) = 0 \\ (x_{0'} - x_B) \cdot (y_C - y_B) - (x_C - x_B) \cdot (y_{0'} - y_B) = 0 \end{cases}$$

$$\begin{cases} (x_D - x_A) \cdot x_{0'} + (y_D - y_A) \cdot y_{0'} = (x_D - x_A) \cdot x_D + (y_D - y_A) \cdot y_D \\ (y_C - y_B) \cdot x_{0'} - (x_C - x_B) \cdot y_{0'} = (y_C - y_B) \cdot x_B - (x_C - x_B) \cdot y_B \end{cases}$$

$$(x_D - x_A) \cdot x_D + (y_D - y_A) \cdot y_D = A1$$

$$(y_C - y_B) \cdot x_B - (x_C - x_B) \cdot y_B = A2$$

$$\begin{cases} (x_D - x_A)(x_C - x_B) \cdot x_{0'} + (y_D - y_A)(x_C - x_B) \cdot y_{0'} = A1 \cdot (x_C - x_B) \\ (y_C - y_B)(y_D - y_A) \cdot x_{0'} - (x_C - x_B)(y_D - y_A) \cdot y_{0'} = A2 \cdot (y_D - y_A) \end{cases}$$

$$x_{0'} = \frac{A1(x_C - x_B) + A2(y_D - y_A)}{(x_D - x_A) \cdot (x_C - x_B) + (y_C - y_B) \cdot (y_D - y_A)}$$

$$\begin{cases} (x_D - x_A)(y_C - y_B) \cdot x_{0'} + (y_D - y_A)(y_C - y_B) \cdot y_{0'} = A1 \cdot (y_C - y_B) \\ (x_D - x_A)(y_C - y_B) \cdot x_{0'} - (x_C - x_B)(x_D - x_A) \cdot y_{0'} = A2 \cdot (x_D - x_A) \end{cases}$$

$$y_{0\prime} = \frac{A1(y_C - y_B) + A2(x_D - x_A)}{(y_D - y_A)\cdot(y_C - y_B) + (x_C - x_B)\cdot(x_D - x_A)}$$

If the long sides are parallel, as shown in the right-side view of FIG. 6, four corner points are sequentially C, B, 1, and 2 in the clockwise direction, and the arrow represents a traveling direction of a vehicle. B1 is a parking lot entrance line segment calculated according to a relative position of the vehicle with respect to the parking lot. A parking lot line BC and a parking lot line 12 at two sides of the parking lot entrance line segment B1 are selected. Since the parking lot line BC is parallel to the parking lot line 12, a center line AD is drawn for the two parallel lines, a point at which the center line AD intersects with the parking lot entrance line segment B1 is point D, and a perpendicular line 0'1' is drawn for AD through point D, where 0' is a point at which the perpendicular line 0'1' intersects with the parking lot line BC, and 1' is a point at which the perpendicular line 0'1' intersects with the parking lot line 12. Similarly, it is also possible to calculate coordinates of point 0' and point 1' based on point A, point B, point C, point D.

In this way, after the positions of the two corner points of the short sides are corrected in two cases of parallel and non-parallel long sides, the parking lot may be subjected to rectangularization according to the corrected positions of the two corner points, so as to obtain the corrected parking lot.

FIG. 7 is a schematic diagram showing one example of a correction result obtained using the parking lot corner point correction method in Embodiment 2 of the invention.

FIG. 7 shows the case of a small-angle rhombic parking lot. Here, so-called "small-angle rhombic parking lot" means that an angle formed by the vehicle and the entrance of the parking lot is a non-obtuse angle. As an example, when an angle of inclination of the rhombic parking lot is less than 75 degrees, in which case the rhombic parking lot is as shown in the left-side view of FIG. 7, the small-angle inclined parking lot is wrongly determined as a vertical parking lot or a parallel parking lot, and there may be errors directly depending on the effect of rectangularization of the first two corner points. A correction effect shown in the right-side view of FIG. 7 is obtained after correction using the correction method in Embodiment 2.

FIG. 8 is a schematic diagram showing another example of a correction result obtained using the parking lot corner point correction method in Embodiment 2 of the invention. FIG. 8 shows a correction effect, shown in the right-side view of FIG. 8, obtained after correction using the correction method in Embodiment 2 in the case of false detection of a corner point of the parking lot, such as an error in the parking lot caused by an error in the detection of an upper left corner point in the left-side view of FIG. 8.

Next, a parking lot corner point correction system of the invention will be described.

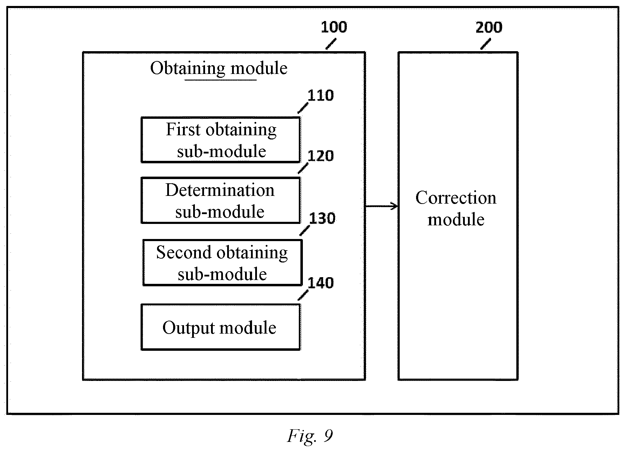

FIG. 9 is a structural block diagram showing a parking lot corner point correction system of the invention.

As shown in FIG. 9, the invention provides a parking lot corner point correction system, the system including:

an obtaining module 100 for obtaining a parking lot corner point of a parking lot; and
a correction module 200 for performing, based on a position relationship between parking lot corner points of the parking lot, rectangular correction on the parking lot corner points to obtain a corrected parking lot.

The obtaining module 100 includes:

a first obtaining sub-module 110 configured to obtain a parking lot corner point of a parking lot;
a determination sub-module 120 configured to determine whether a corner point confidence level of the parking lot corner point acquired by the first obtaining sub-module meets a first threshold and whether a corner point offset of the parking lot corner point meets a second threshold, and then output a determination result; and
a second obtaining sub-module 130 configured to obtain a parking lot corner point at a corresponding position that is predicted by an odometer; and
an output module 140 configured to provide, based on the determination result from the determination sub-module and to the correction module, the parking lot corner point output by the first obtaining sub-module or the parking lot corner point output by the second obtaining sub-module.

Optionally, in the correction module 200, four sides are formed by the parking lot corner points of the parking lot, four rectangles are obtained separately by taking one side in the four sides as a reference and taking the depth as a mean of the side length of the side, and a rectangle with the maximum confidence level on a thermodynamic diagram is taken from among the four rectangles and is used as the corrected parking lot. The confidence level of the rectangle on the thermodynamic diagram is obtained by means of the confidence levels of the four corner points of the rectangle on the thermodynamic diagram. The confidence levels on the thermodynamic diagram are obtained by means of a corner point prediction model.

Optionally, in the correction module 200, two sides are selected from four sides formed by the parking lot corner points of the parking lot, a center line of the two sides is calculated, a parking lot entrance line segment of the parking lot is obtained according to a position relationship between a vehicle and the parking lot corner points of the parking lot, a point at which the center line intersects with the parking lot entrance line segment is obtained, and based on the position of the intersection point and the positions of the two sides, rectangular correction is performed on the parking lot corner point by using a geometric relationship in FIG. 6 to obtain the corrected parking lot.

If the two sides are parallel, a line which is parallel to the two sides and has an equal distance to the two sides is taken as a center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

If the two sides are not parallel, an angular bisector of an angle formed by extension lines of the two sides is used as the center line, a perpendicular line is drawn for the center line from the intersection point, points at which the perpendicular line respectively intersects with the two sides are used as corrected parking lot corner points, and rectangularization is performed based on the corrected parking lot corner points to obtain the corrected parking lot.

The invention further provides a computer-readable medium having a computer program stored thereon, where the computer program implements, when executed by a processor, a parking lot corner point correction system as described above.

The invention further provides a computer device, which includes a storage module, a processor, and a computer program stored on the storage module and executable on the processor, where the computer program implements, when executed by the processor, a parking lot corner point correction system as described above.

The invention further provides a vehicle, the vehicle including a parking lot corner point correction system as described above.

The examples above mainly illustrate a parking lot corner point correction method, a parking lot corner point correction system, and a vehicle including the parking lot corner point correction system in the invention. Although only some specific implementations of the invention are described, a person of ordinary skill in the art should understand that the invention may be implemented in multiple other forms without departing from the essence and scope of the invention. Accordingly, the presented examples and implementations are considered to be illustrative rather than restrictive, and the invention may encompass various modifications and replacements without departing from the scope of the invention that are defined by the appended claims.

**Claims**

1. A parking lot corner point correction method, comprising:

   an obtaining step of obtaining a parking lot corner point (B, C, 1, 2) of a parking lot; and
   performing, based on a position relationship between parking lot corner points of the parking lot, correction on the parking lot corner points to obtain a corrected parking lot,
   wherein the correction is performed as follows:

      selecting two long sides (B-C, 1-2) from four sides formed by the parking lot corner points (B, C, 1, 2) of the parking lot, and calculating a center line (A-D) of the two long sides (B-C, 1-2);
      obtaining a parking lot entrance line segment (B-1) of the parking lot according to a position relationship between a vehicle and the parking lot corner point of the parking lot;
      obtaining an intersection point (D) at which the center line (A-D) intersects with the parking lot entrance line segment (B-1);
      obtaining a perpendicular line (0'-1') through the intersection point (D), with the perpendicular line (0'-1') being perpendicular to the centerline (A-D); and
      based on the position of the intersection point (D) and the positions of the two long sides (B-C, 1-2), performing the correction on the parking lot corner point by using a geometric relationship to obtain the corrected parking lot, wherein the points (0', 1') at which the perpendicular line (0'-1') respectively intersects the two long sides (B-C, 1-2) are used as corrected parking lot corner points.

2. The parking lot corner point correction method according to claim 1, wherein the parking lot corner points (B, C, 1, 2) are obtained as follows:

      a first obtaining sub-step of obtaining a parking lot corner point of a parking lot;
      a determination sub-step of determining whether a corner point confidence level of the parking lot corner point meets a first threshold and whether a corner point offset of the parking lot corner point meets a second threshold, and jumping to the correction step if it is determined that the corner point confidence level of the parking lot corner point meets the first threshold and the corner point offset of the parking lot corner point meets the second threshold, otherwise, proceeding to a second obtaining sub-step; and

the second obtaining sub-step of discarding the parking lot corner point of the parking lot that is detected in the first obtaining sub-step, and then using a parking lot corner point at a corresponding position that is determined by an odometer, as the parking lot corner point of the parking lot.

3. The parking lot corner point correction method according to claim 1 or 2, wherein
if the two long sides (B-C, 1-2) are parallel, a line which is parallel to the two sides and has an equal distance to the two sides is taken as the center line (A-D), , and rectangularization is performed based on the corrected parking lot corner points to obtain the corrected parking lot.

4. The parking lot corner point correction method according to any one of claims 1 to 3, wherein
if the two long sides (B-C, 1-2) are not parallel, an angular bisector of an angle formed by extension lines (A-C, A-2) of the two long sides is used as the center line (A-D), and rectangularization is performed based on the corrected parking lot corner points to obtain the corrected parking lot.

5. A parking lot corner point correction system, comprising:

an obtaining module (100) for obtaining a parking lot corner point (B, C, 1, 2) of a parking lot; and
a correction module (200) for performing, based on a position relationship between parking lot corner points of the parking lot, correction on the parking lot corner points to obtain a corrected parking lot,
wherein in the correction module, two long sides (B-C, 1-2) are selected from four sides formed by the parking lot corner points (B, C, 1, 2) of the parking lot, a center line (A-D) of the two long sides (B-C, 1-2) is calculated, a parking lot entrance line segment (B-1) of the parking lot is obtained according to a position relationship between a vehicle and the parking lot corner points of the parking lot, an intersection point (D) at which the center line (A-D) intersects with the parking lot entrance line segment (B-1) is obtained, a perpendicular line (0'-1') through the intersection point (D) is obtained, with the perpendicular line (0'-1') being perpendicular to the centerline (A-D), and based on the position of the intersection point (D) and the positions of the two long sides (B-C, 1-2), the correction is performed on the parking lot corner point by using a geometric relationship to obtain the corrected parking lot, wherein the points (0', 1') at which the perpendicular line (0'-1') respectively intersects the two long sides (B-C, 1-2) are used as corrected parking lot corner points.

6. The parking lot corner point correction system according to claim 5, wherein the obtaining module comprises:

a first obtaining sub-module (110) configured to obtain a parking lot corner point (B, C, 1, 2) of a parking lot;
a determination sub-module (120) configured to determine whether a corner point confidence level of the parking lot corner point acquired by the first obtaining sub-module meets a first threshold and whether a corner point offset of the parking lot corner point meets a second threshold, and then output a determination result; and
a second obtaining sub-module (130) configured to obtain a parking lot corner point at a corresponding position that is determined by an odometer; and
an output module (140) configured to provide, based on the determination result from the determination sub-module and to the correction module, the parking lot corner point output by the first obtaining sub-module or the parking lot corner point output by the second obtaining sub-module.

7. The parking lot corner point correction system according to claim 5 or 6,
wherein
if the two long sides (B-C, 1- 2) are parallel, a line which is parallel to the two long sides and has an equal distance to the two long sides is taken as the center line (A-D), and rectangularization is performed based on the corrected parking lot corner points to obtain the corrected parking lot.

8. The parking lot corner point correction system according to any of claims 5 to 7, wherein
if the two long sides (B-C, 1-2) are not parallel, an angular bisector of an angle formed by extension lines (A-C, A-2) of the two long sides is used as the center line (A-D), and rectangularization is performed based on the corrected parking lot corner points to obtain the corrected parking lot.

9. A computer device, comprising a storage module, a processor, and a computer program stored on the storage module and executable on the processor, wherein the computer program implements, when executed by the processor, a parking lot corner point correction method of any one of claims 1 to 4.

**Patentansprüche**

1.  Parkplatzeckpunktkorrekturverfahren, umfassend:

    einen Gewinnungsschritt des Gewinnens eines Parkplatzeckpunktes (B, C, 1, 2) eines Parkplatzes; und
    Durchführen, basierend auf einer Positionsbeziehung zwischen Parkplatzeckpunkten des Parkplatzes, einer Korrektur an den Parkplatzeckpunkten, um einen korrigierten Parkplatz zu erhalten,
    wobei die Korrektur wie folgt durchgeführt wird;
    Auswählen von zwei langen Seiten (B-C, 1-2) aus vier Seiten, die von den Parkplatzeckpunkten (B, C, 1, 2) des Parkplatzes gebildet werden, und Berechnen einer Mittellinie (A-D) der zwei langen Seiten (B-C, 1-2);
    Gewinnen eines Parkplatzeinfahrts-Liniensegments (B-1) des Parkplatzes gemäß einer Positionsbeziehung zwischen einem Fahrzeug und dem Parkplatzeckpunkt des Parkplatzes;
    Gewinnen eines Schnittpunktes (D), an dem sich die Mittellinie (A-D) mit dem Parkplatzeinfahrts-Liniensegment (B-1) schneidet;
    Gewinnen einer senkrechten Linie (0'-1') durch den Schnittpunkt (D), wobei die senkrechte Linie (0'-1') senkrecht zu der Mittellinie (A-D) ist; und
    basierend auf der Position des Schnittpunktes (D) und den Positionen der zwei langen Seiten (B-C, 1-2), Durchführen der Korrektur an dem Parkplatzeckpunkt unter Verwendung einer geometrischen Beziehung, um den korrigierten Parkplatz zu erhalten, wobei die Punkte (0', 1'), an denen die senkrechte Linie (0'-1') jeweils eine der zwei langen Seiten (B-C, 1-2) schneidet, als korrigierte Parkplatzeckpunkte verwendet werden.

2.  Parkplatzeckpunktkorrekturverfahren nach Anspruch 1, wobei die Parkplatzeckpunkte (B, C, 1, 2) wie folgt gewonnen werden:

    ein erster Gewinnungsteilschritt des Gewinnens eines Parkplatzeckpunktes eines Parkplatzes;
    ein Bestimmungsteilschritt des Bestimmens, ob ein Eckpunkt-Konfidenzniveau des Parkplatzeckpunktes einen ersten Schwellenwert erreicht und ob ein Eckpunktversatz des Parkplatzeckpunktes einen zweiten Schwellenwert erreicht, und Springen zum Korrekturschritt, falls bestimmt wird, dass das Eckpunkt-Konfidenzniveau des Parkplatzeckpunktes den ersten Schwellenwert erreicht und der Eckpunktversatz des Parkplatzeckpunktes den zweiten Schwellenwert erreicht, andernfalls Fortfahren mit einem zweiten Gewinnungsteilschritt; und
    der zweite Gewinnungsteilschritt des Verwerfens des Parkplatzeckpunktes, der im ersten Gewinnungsteilschritt erkannt wird, und danach Verwenden eines Parkplatzeckpunktes an einer entsprechenden Position, die von einem Odometer bestimmt wird, als Parkplatzeckpunkt des Parkplatzes.

3.  Parkplatzeckpunktkorrekturverfahren nach Anspruch 1 oder 2, wobei,
    falls die zwei langen Seiten (B-C, 1-2) parallel sind, eine Linie, welche parallel zu den zwei Seiten ist und den gleichen Abstand von den zwei Seiten hat, als Mittellinie (A-D) genommen wird und basierend auf den korrigierten Parkplatzeckpunkten ein Rechteckigmachen durchgeführt wird, um den korrigierten Parkplatz zu erhalten.

4.  Parkplatzeckpunktkorrekturverfahren nach einem der Ansprüche 1 bis 3, wobei,
    falls die zwei langen Seiten (B-C, 1-2) nicht parallel sind, eine Winkelhalbierende eines von Verlängerungslinien (A-C, A-2) der zwei langen Seiten gebildeten Winkels als Mittellinie (A-D) verwendet wird und basierend auf den korrigierten Parkplatzeckpunkten ein Rechteckigmachen durchgeführt wird, um den korrigierten Parkplatz zu erhalten.

5.  Parkplatzeckpunktkorrektursystem, umfassend:

    ein Gewinnungsmodul (100) zum Gewinnen eines Parkplatzeckpunktes (B, C, 1, 2) eines Parkplatzes; und
    ein Korrekturmodul (200) zum Durchführen, basierend auf einer Positionsbeziehung zwischen Parkplatzeckpunkten des Parkplatzes, einer Korrektur an den Parkplatzeckpunkten, um einen korrigierten Parkplatz zu erhalten,
    wobei in dem Korrekturmodul zwei lange Seiten (B-C, 1-2) aus vier Seiten, die von den Parkplatzeckpunkten (B, C, 1, 2) des Parkplatzes gebildet werden, ausgewählt werden, eine Mittellinie (A-D) der zwei langen Seiten (B-C, 1-2) berechnet wird, ein Parkplatzeinfahrts-Liniensegment (B-1) des Parkplatzes gemäß einer Positionsbeziehung zwischen einem Fahrzeug und den Parkplatzeckpunkten des Parkplatzes gewonnen wird, ein Schnittpunkt (D), an dem sich die Mittellinie (A-D) mit dem Parkplatzeinfahrts-Liniensegment (B-1) schneidet, gewonnen wird, eine senkrechte Linie (0'-1') durch den Schnittpunkt (D) gewonnen wird, wobei die senkrechte Linie (0'-1') senkrecht zu der Mittellinie (A-D) ist, und basierend auf der Position des Schnittpunktes (D) und den Positionen der zwei langen Seiten (B-C, 1-2) die Korrektur an dem Parkplatzeckpunkt unter Verwendung einer geometrischen Beziehung durchgeführt wird, um den korrigierten Parkplatz zu erhalten, wobei die Punkte (0', 1'), an denen die senkrechte Linie (0'-1') jeweils eine der zwei langen Seiten (B-C, 1-2) schneidet, als korrigierte Parkplatzeckpunkte verwendet werden.

6. Parkplatzeckpunktkorrektursystem nach Anspruch 5, wobei das Gewinnungsmodul umfasst:

ein erstes Gewinnungsteilmodul (110), das dafür ausgelegt ist, einen Parkplatzeckpunkt (B, C, 1, 2) eines Parkplatzes zu gewinnen;
ein Bestimmungsteilmodul (120), das dafür ausgelegt ist zu bestimmen, ob ein Eckpunkt-Konfidenzniveau des Parkplatzeckpunktes, der von dem ersten Gewinnungsteilmodul erfasst wurde, einen ersten Schwellenwert erreicht und ob ein Eckpunktversatz des Parkplatzeckpunktes einen zweiten Schwellenwert erreicht, und danach ein Bestimmungsergebnis auszugeben; und
ein zweites Gewinnungsteilmodul (130), das dafür ausgelegt ist, einen Parkplatzeckpunkt an einer entsprechenden Position zu gewinnen, die von einem Odometer bestimmt wird; und
ein Ausgabemodul (140), das dafür ausgelegt ist, basierend auf dem Bestimmungsergebnis von dem Bestimmungsteilmodul und für das Korrekturmodul, den Parkplatzeckpunkt, der von dem ersten Gewinnungsteilmodul ausgegeben wurde, oder den Parkplatzeckpunkt, der von dem zweiten Gewinnungsteilmodul ausgegeben wurde, bereitzustellen.

7. Parkplatzeckpunktkorrektursystem nach Anspruch 5 oder 6, wobei,
falls die zwei langen Seiten (B-C, 1-2) parallel sind, eine Linie, welche parallel zu den zwei langen Seiten ist und den gleichen Abstand von den zwei langen Seiten hat, als Mittellinie (A-D) genommen wird und basierend auf den korrigierten Parkplatzeckpunkten ein Rechteckigmachen durchgeführt wird, um den korrigierten Parkplatz zu erhalten.

8. Parkplatzeckpunktkorrektursystem nach einem der Ansprüche 5 bis 7, wobei,
falls die zwei langen Seiten (B-C, 1-2) nicht parallel sind, eine Winkelhalbierende eines von Verlängerungslinien (A-C, A-2) der zwei langen Seiten gebildeten Winkels als Mittellinie (A-D) verwendet wird und basierend auf den korrigierten Parkplatzeckpunkten ein Rechteckigmachen durchgeführt wird, um den korrigierten Parkplatz zu erhalten.

9. Computergerät, welches ein Speichermodul, einen Prozessor und ein Computerprogramm, das auf dem Speichermodul gespeichert und auf dem Prozessor ausführbar ist, umfasst, wobei das Computerprogramm, wenn es von dem Prozessor ausgeführt wird, ein Parkplatzeckpunktkorrekturverfahren nach einem der Ansprüche 1 bis 4 implementiert.

**Revendications**

1. Procédé de correction de points de coin de parc de stationnement, comprenant :

une étape d'obtention, de l'obtention d'un point de coin de parc de stationnement (B, C, 1, 2) d'un parc de stationnement ; et
de la réalisation, sur la base d'une relation de position entre des points de coin de parc de stationnement du parc de stationnement, d'une correction sur les points de coin de parc de stationnement pour obtenir un parc de stationnement corrigé,
dans lequel la correction est réalisée comme suit :

la sélection de deux côtés longs (B-C, 1-2) à partir de quatre côtés formés par les points de coin de parc de stationnement (B, C, 1, 2) du parc de stationnement, et le calcul d'une ligne centrale (A-D) des deux côtés longs (B-C, 1-2) ;
l'obtention d'un segment de ligne d'entrée de parc de stationnement (B-1) du parc de stationnement selon une relation de position entre un véhicule et le point de coin de parc de stationnement du parc de stationnement ;
l'obtention d'un point d'intersection (D) auquel la ligne centrale (A-D) intersecte le segment de ligne d'entrée de parc de stationnement (B-1) ;

l'obtention d'une ligne perpendiculaire (0'-1') à travers le point d'intersection (D), la ligne perpendiculaire (0'-1') étant perpendiculaire à la ligne centrale (A-D) ; et

sur la base de la position du point d'intersection (D) et des positions des deux côtés longs (B-C, 1-2), la réalisation de la correction sur le point de coin de parc de stationnement en utilisant une relation géométrique pour obtenir le parc de stationnement corrigé, dans lequel les points (0', 1) auxquels la ligne perpendiculaire (0'-1') intersecte respectivement les deux côtés longs (B-C, 1-2) sont utilisés en tant que points de coin de parc de stationnement corrigés.

2. Procédé de correction de points de coin de parc de stationnement selon la revendication 1, dans lequel les points de coin de parc de stationnement (B, C, 1, 2) sont obtenus comme suit :

une première sous-étape d'obtention, de l'obtention d'un point de coin de parc de stationnement d'un parc de stationnement ;

une sous-étape de détermination, de la détermination du fait qu'un niveau de confiance de point de coin du point de coin de parc de stationnement respecte, ou ne respecte pas, un premier seuil et du fait qu'un décalage de point de coin du point de coin de parc de stationnement respecte, ou ne respecte pas, un second seuil, et le passage à l'étape de correction s'il est déterminé que le niveau de confiance de point de coin du point de coin de parc de stationnement respecte le premier seuil et le décalage de point de coin du point de coin de parc de stationnement respecte le second seuil, autrement, la continuation à une seconde sous-étape d'obtention ; et

la seconde sous-étape d'obtention, de l'abandon du point de coin de parc de stationnement du parc de stationnement qui est détecté dans la première sous-étape d'obtention, et puis de l'utilisation d'un point de coin de parc de stationnement à une position correspondante qui est déterminée par un odomètre, en tant que point de coin de parc de stationnement du parc de stationnement.

3. Procédé de correction de points de coin de parc de stationnement selon la revendication 1 ou 2, dans lequel si les deux côtés longs (B-C, 1-2) sont parallèles, une ligne qui est parallèle aux deux côtés et a une distance égale jusqu'aux deux côtés est adoptée en tant que la ligne centrale (A-D), et une rectangularisation est réalisée sur la base des points de coin de parc de stationnement corrigés pour obtenir le parc de stationnement corrigé.

4. Procédé de correction de points de coin de parc de stationnement selon l'une quelconque des revendications 1 à 3, dans lequel si les deux côtés longs (B-C, 1-2) ne sont pas parallèles, une bissectrice angulaire d'un angle formé par des lignes d'extension (A-C, A-2) des deux côtés longs est utilisée en tant que ligne centrale (A-D), et une rectangularisation est réalisée sur la base des points de coin de parc de stationnement corrigés pour obtenir le parc de stationnement corrigé.

5. Système de correction de points de coin de parc de stationnement, comprenant :

un module d'obtention (100) pour obtenir un point de coin de parc de stationnement (B, C, 1, 2) d'un parc de stationnement ; et

un module de correction (200) pour réaliser, sur la base d'une relation de position entre des points de coin de parc de stationnement du parc de stationnement, une correction sur les points de coin de parc de stationnement pour obtenir un parc de stationnement corrigé,

dans lequel, dans le module de correction, deux côtés longs (B-C, 1-2) sont sélectionnés à partir de quatre côtés formés par les points de coin de parc de stationnement (B, C, 1, 2) du parc de stationnement, une ligne centrale (A-D) des deux côtés longs (B-C, 1-2) est calculée, un segment de ligne d'entrée de parc de stationnement (B-1) du parc de stationnement est obtenu selon une relation de position entre un véhicule et les points de coin de parc de stationnement du parc de stationnement, un point d'intersection (D) auquel la ligne centrale (A-D) intersecte le segment de ligne d'entrée de parc de stationnement (B-1) est obtenu, une ligne perpendiculaire (0'-1') à travers le point d'intersection (D) est obtenue, la ligne perpendiculaire (0'-1') étant perpendiculaire à la ligne centrale (A-D), et, sur la base de la position du point d'intersection (D) et des positions des deux côtés longs (B-C, 1-2), la correction est réalisée sur le point de coin de parc de stationnement en utilisant une relation géométrique pour obtenir le parc de stationnement corrigé, dans lequel les points (0, 1) auxquels la ligne perpendiculaire (0'-1) intersecte respectivement les deux côtés longs (B-C, 1-2) sont utilisés en tant que points de coin de parc de stationnement corrigés.

6. Système de correction de points de coin de parc de stationnement selon la revendication 5, dans lequel le module d'obtention comprend :

un premier sous-module d'obtention (110) configuré pour obtenir un point de coin de parc de stationnement (B, C, 1, 2) d'un parc de stationnement ;

un sous-module de détermination (120) configuré pour déterminer le fait qu'un niveau de confiance de point de coin du point de coin de parc de stationnement acquis par le premier sous-module d'obtention respecte, ou ne respecte pas, un premier seuil et le fait qu'un décalage de point de coin du point de coin de parc de stationnement respecte, ou ne respecte pas, un second seuil, et puis produire en sortie un résultat de détermination ; et

un second sous-module d'obtention (130) configuré pour obtenir un point de coin de parc de stationnement à une position correspondante qui est déterminée par un odomètre ; et

un module de sortie (140) configuré pour fournir, sur la base du résultat de détermination provenant du sous-module de détermination et au module de correction, le point de coin de parc de stationnement produit en sortie par le premier sous-module d'obtention, ou le point de coin de parc de stationnement produit en sortie par le second sous-module d'obtention.

7. Système de correction de points de coin de parc de stationnement selon la revendication 5 ou 6, dans lequel

si les deux côtés longs (B-C, 1- 2) sont parallèles, une ligne qui est parallèle aux deux côtés longs et a une distance égale jusqu'aux deux côtés longs est adoptée en tant que ligne centrale (A-D), et une rectangularisation est réalisée sur la base des points de coin de parc de stationnement corrigés pour obtenir le parc de stationnement corrigé.

8. Système de correction de points de coin de parc de stationnement selon de quelconques des revendications 5 à 7, dans lequel

si les deux côtés longs (B-C, 1-2) ne sont pas parallèles, une bissectrice angulaire d'un angle formé par des lignes d'extension (A-C, A-2) des deux côtés longs est utilisée en tant que ligne centrale (A-D), et une rectangularisation est réalisée sur la base des points de coin de parc de stationnement corrigés pour obtenir le parc de stationnement corrigé.

9. Dispositif informatique, comprenant un module de stockage, un processeur, et un programme informatique stocké sur le module de stockage et exécutable sur le processeur, dans lequel le programme informatique met en œuvre, lorsqu'il est exécuté par le processeur, un procédé de correction de points de coin de parc de stationnement de l'une quelconque des revendications 1 à 4.

S100

Detect a parking lot
corner point

S200

Determine
the state of the parking lot
corner point

Reserve the detected
parking lot corner point

S300

Discard the detected
parking lot corner point,
and use a parking lot
corner point at a
corresponding position that
is predicted by an
odometer

S400

Determine parking lot
corner points

S500

Perform rectangular
correction

S600

*Fig. 1*

Fig. 2

*Fig. 3*

*Fig. 4*

S11

Detect a parking
lot corner point

S12

Determine
the state of the parking lot
corner
point

S13

Reserve the
detected parking
lot corner point

S14

Discard the detected
parking lot corner point,
and use a parking lot
corner point at a
corresponding position
that is predicted by an
odometer

S15

Determine parking
lot corner points

S16

Are long
sides of a parking
lot parallel?

S17

Obtain a center line
of the two long
sides

S18

Obtain an angular
bisector of the two
long sides

S19

Correct the positions
of two corner points
of short sides

S20

Perform
rectangularization on a
predicted parking lot
according to the two
corner points

*Fig. 5*

18

*Fig. 6*

*Fig. 7*

*Fig. 8*

*Fig. 9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020294310 A1

- US 2020090516 A1